# EUROPÄISCHE PATENTSCHRIFT

(11) **EP 2 542 881 B1**
(45) Veröffentlichungstag und Bekanntmachung des Hinweises auf die Patenterteilung: **13.03.2024**
(21) Anmeldenummer: 11702594.0
(22) Anmeldetag: 26.01.2011
(51) Int. Cl.: G01N 21/53

(54) **VERFAHREN UND VORRICHTUNG ZUR NEBELERKENNUNG MITTELS SPEKTROSKOPIE**
METHOD AND APPARATUS FOR DETECTING MIST BY MEANS OF SPECTROSCOPY
PROCÉDÉ ET DISPOSITIF DE DÉTECTION DE BROUILLARD PAR SPECTROSCOPIE

(30) Priorität: 02.03.2010 DE 102010002488
(43) Veröffentlichungstag der Anmeldung: 09.01.2013
(73) Patentinhaber: Robert Bosch GmbH, 70442 Stuttgart (DE)
(72) Erfinder: EHLGEN, Tobias, 72076 Tuebingen (DE); VAN STAA, Sebastian, 71229 Leonberg (DE)
(86) Internationale Anmeldenummer: PCT/EP2011/051026
(87) Internationale Veröffentlichungsnummer: WO 2011/107308

(56) Entgegenhaltungen:
- US-A1- 2005 270 537
- STEPHEN M METZGER S ET AL: "Techniques for Identifying Dust Devils in Mars Pathfinder Images", IEEE TRANSACTIONS ON GEOSCIENCE AND REMOTE SENSING, IEEE SERVICE CENTER, PISCATAWAY, NJ, US, Bd. 38, Nr. 2, 1. März 2000 (2000-03-01), XP011021493, ISSN: 0196-2892
- HUO ET AL: "Cloud Determination of All-Sky Images under Low-Visibility Conditions", JOURNAL OF ATMOSPHERIC AND OCEANIC TECHNOLOGY, AMERICAN METEOROLOGICAL SOCIETY, BOSTON, MA, US, Bd. 26, Nr. 10, 1. Oktober 2009 (2009-10-01), Seiten 2172-2181, XP008136347, ISSN: 0739-0572, DOI: DOI:10.1175/2009JTECHA1324
- CANTOR ET AL: "MOC observations of the 2001 Mars planet-encircling dust storm", ICARUS, ACADEMIC PRESS, SAN DIEGO, CA, US, Bd. 186, Nr. 1, 8. Dezember 2006 (2006-12-08), Seiten 60-96, XP005725236, ISSN: 0019-1035, DOI: DOI:10.1016/J.ICARUS.2006.08.019
- LIVINGSTON, RUSSELL, REID, REDEMANN, SCHMID, ALLEN, TORRES, LEVY, REMER, HOLBEN, SMIRNOV, DUBOVIK, WELTON, CAMPBELL, WANG: "Airborne Sun photometer measurements of aerosol optical depth and columnar water vapor during the Puerto Rico Dust Experiment and comparison with land, aircraft, and satellite measurements", JOURNAL OF GEOPHYSICAL RESEARCH, Bd. 108, Nr. D19, 2. Juli 2003 (2003-07-02), Seiten 4-1-4-23, XP002636864, DOI: doi:10.1029/2002JD002520

## Beschreibung

### Stand der Technik

Die Erfindung geht aus von einer Vorrichtung und einem Verfahren nach Gattung der unabhängigen Ansprüche.

Zur Erkennung von Sichtbehinderungen in einem Fahrzeug, die insbesondere durch Nebel hervorgerufen werden, existieren im Stand der Technik einige Verfahren, um Nebel zu erkennen.

Aus der EP 1498721 A1 ist eine Vorrichtung bekannt, die mittels einer Kamera in einem Fahrzeug in Fahrtrichtung Bilder aufnimmt. Ein Bild dieser Kamera wird dahingehend ausgewertet, ob es wenigstens ein Pixel gibt, das einen Helligkeitswert unterschreitet, d. h. dunkel ist. Durch die Streulichteffekte bei vorhandenem Nebel geht man davon aus, dass alle Pixel bei Vorhandensein von Nebel eine Mindesthelligkeit aufweisen und somit einen Rückschluss auf Nebel zulassen.

Bekannt sind weiterhin Kamerasysteme zum Einsatz im Fahrzeug zur Nebelerkennung, die ein aktives Element (z. B. Infrarot-LED) benötigen, z. B. die EP 2020595 A1.

Ein weiteres Verfahren ist die Nebeldetektion basierend auf der Erkennung von Objekten und gegebenenfalls deren Entfernung. Die EP 1826648 A2 vergleicht die Kantenstärke von erkannten Objekten mit denen in einer Datenbank und kann daraus die Sichtverhältnisse bzw. Regen oder Nebel ableiten. Dies funktioniert nur, solange Objekte vorhanden sind und diese in der Datenbank beschrieben.

Ein detaillierteres Verfahren beschreibt die EP 2056093 A1, bei dem die Grauwertverteilung in einem bestimmten Bereich des Bildes, insbesondere am Horizont, betrachtet werden. Dieses Verfahren kann jedoch auch bei anderen Witterungsverhältnissen, die den gleichen physikalischen Effekt im Bild zur Folge haben, zur Fehldetektion führen, ein mögliches Beispiel hierfür wäre eine Schneedecke auf der Landschaft und Straße.

Aus dem Stand der Technik ist weiterhin die WO 2004/076231 A2 bekannt. Diese Schrift betrifft ein Automatisches Fahrzeugaußenlichtsteuerungs- bzw. - regelungssystem, umfassend: einen Controller, der konfiguriert ist, ein Bild von einem optischen System zu empfangen, das Bild zu verarbeiten und ein Außenlichtsteuerbzw. -regelsignal zu erzeugen, und zwar als eine Funktion des Vorhandenseins einer interessierenden atmosphärischen Bedingung und eines Umgebungslichtwerts, wobei der Umgebungslichtwert ein gewichteter Durchschnitt einer Mehrzahl von Umgebungslichtpegelablesungen ist.

Des Weiteren gibt es umfangreiche Nicht-Patentliteratur, die sich auch dem Thema Nebelerkennung annimmt.

Jedoch scheint es bisher keine Nebeldetektion mittels bildgebenden Verfahren (Video) zu geben, ohne dass der Abstand (Sichtweite) bestimmt wird, insbesondere der Abstand zu anderen Objekten oder zumindest eine Hypothese über einen solchen.

Stephen M. Metzger et. al. beschreiben in dem Dokument "Techniques for Identifying Dust Devils in Mars Pathfinder Images", IEEE Transactions on Geoscience and Remote Sensing, Band 38, Nr. 2, 01. März 2000, ISSN: 0196-2892, Seite 871 bis Seite 872 ein Verfahren zur Hervorhebung eines Staubwirbels innerhalb einer Reihe von Bildaufnahmen. Hierzu werden insgesamt vier Bildaufnahmen verwendet, von denen zwei mittels eines Rotfilters und zwei weitere mittels eines Blaufilters gefiltert wurden. Die jeweils gleichfarbig gefilterten Bilder unterscheiden sich dadurch, dass eines dieser Bilder ein Referenzbild darstellt, welches den Himmel ohne Staubwirbel zeigt. Das jeweils zweite Bild enthält den Staubwirbel. Zur Hervorhebung des Staubwirbels werden die jeweils gleichartig farblich gefilterten Bilder voneinander subtrahiert. Die daraus entstehenden Ergebnisbilder werden wiederum subtrahiert. Somit ergibt sich insgesamt ein einzelnes Bild, in dem der Staubwirbel hervorgehoben sein soll.

Juan Huo et. al. beschreiben in "Cloud Determination of All-Sky Images under Low-Visibility Conditions", Journal Of Atmospheric And Oceanic Technology, American Meteorological Society, Band 26, Nr. 10, 1. Oktober 2009, Seiten 2172 bis 2181, XP008136347, ein Verfahren zur Detektion von Wolken innerhalb eines Bildes. Hierzu werden zwei Farbkanäle eines Bildes des Himmels miteinander verglichen. Insbesondere wird vorgeschlagen, den roten Kanal mit dem blauen Kanal pixelweise ins Verhältnis zu setzen. Diese Verhältnis wird anschließend mit einem Schwellenwert verglichen, so dass das jeweilige Pixel als "wolkenlos" oder "Wolke" klassifiziert werden kann. Hieraus folgt wiederum ein Gesamtbild, in dem ein Ort einer Wolke beschrieben ist.

### Offenbarung der Erfindung

Das erfindungsgemäße Verfahren (Vorrichtung) mit den Merkmalen des unabhängigen Anspruchs hat demgegenüber den Vorteil, dass durch die Auswertung der spektralen Eigenschaften von Aerosolen ein Messverfahren möglich ist, das ohne aktive Beleuchtung, Bestimmung einer Entfernung oder Sichtweite oder spezielle Sensorik ausschließlich für die Aerosolerkennung auskommt. Die Beleuchtung erfolgt durch mindestens einen Scheinwerfer.

Der zu Grunde liegende physikalische Effekt ist die erhöhte Absorption von Licht beim Durchdringen durch Aerosole, wo die Lichtstrahlen an den Partikel bzw. Molekülen (z. B. Wasser) absorbiert oder gebrochen werden. Diese Absorption und Dispersion ist jedoch wellenlängenabhängig, wie man beispielsweise daran erkennt, dass Nebel ein relativ kaltes Licht, d. h. hohe Farbtemperatur erzeugt. Durch Betrachtung der Farbanteile im Videobild kann dieser Effekt erkannt und daraufhin ausgewertet werden.

Vorteilhaft ist weiterhin, die diesem optischen Zusammenhang folgende Möglichkeit, Aerosole von anderen im Bild befindlichen Objekten oder Strukturen zu unterscheiden und weiterhin oder alternativ auch die Art und/oder die Dichte (Konzentration) des Aerosols zu bestimmen. Hiermit wird mittels eines durch ein bildgebendes Verfahren gewonnenen Bildes oder mehrerer Bilder das erfindungsgemäße Verfahren durchgeführt. Entweder liegen erfindungsgemäß wenigstens zwei Bilder mit unterschiedlicher Farbinformation vor, oder diese wird aus einem Bild ermittelt, beispielsweise mit bekannten farbextrahierenden Verfahren aus einem RGB-Bild oder beispielsweise bei einem mit einer R3I-Kamera gewonnenen Bild durch Maskierung der jeweiligen Rotpixel bzw. der Nicht-Rotpixel (Graupixel). Die Farbfilterung kann durch hardwaretechnische Maßnahmen (im Rahmen der Bildaufnahme) realisiert sein, wie beispielsweise einem entsprechenden Farbfilter vor dem Objektiv oder Teilen des Objektivs oder im Strahlengang oder durch eine Farbmaske über den Pixeln des Imagers. Eine Filterung kann weiterhin auch durch softwaretechnische (im Rahmen einer Bildbearbeitung) Maßnahmen realisiert werden, indem die gewünschten Farbkanäle oder Farbspektren aus einem Farbbild heraus extrahiert werden.

Das wenigstens eine auszuwertende Bild muss eine Szene aufnehmen, in der ein Aerosol erkannt werden kann, bzw. sichtbar ist und zwar derart, dass eine gewisse optische Tiefe gewährleistet ist, so dass Dispersions- und Absorptionseffekte mit ihren unterschiedlichen spektralen Eigenschaften in dem Maße zum Tragen kommen, dass sie sich in dem wenigstens einen Bild auswirken und messbar sind. So scheint eine Kameraausrichtung sinnvoller, die auf die Weite (z.B. des Horizonts/der Landschaft) ausgerichtet ist, anstatt z. B. auf den Boden, sofern zwischen der Kamera und dem Boden ein so geringer Abstand besteht, dass der Nebel nur unwesentlich sichtbar wäre. Das Verfahren eignet sich für die Anwendung in einem Kraftfahrzeug, in dem heutzutage für andere Fahrerassistenzfunktionen oftmals bereits eine Kamera eingebaut ist, die nun zusätzlich die erfindungsgemäße Aufgabe übernehmen kann, ohne dass für Hardware (wesentliche) zusätzliche Kosten entstehen.

Das wenigstens eine Bild soll nun derart gefiltert werden, dass am Ende wenigstens zwei (virtuelle) Bilder existieren, die unterschiedliche Farbinformationen beinhalten. Je nach optischen oder spektralen Eigenschaften der zu erkennenden Aerosole kann das zu filternde Farbband größer oder kleiner, gegebenenfalls auch auf eine einzelne Lichtfrequenz beschränkt sein. Das zweite (virtuelle) Bild muss in jedem Fall eine andere Farbinformation als das erste besitzen. Dementsprechend muss der Filter auch anders ausgebildet sein. Anstatt dessen kann auf die Verwendung eines zweiten Farbfilters auch verzichtet werden und gegebenenfalls sogar das ursprüngliche Bild mit aller Farbinformation (oder der Grauinformation) verwendet werden.

Falls die spektralen Unterscheidungsmerkmale des einen oder mehrerer Aerosole einer detaillierteren Farbspektroskopie bedürfen, so muss dieses Verfahren nicht zwangsläufig mit den beschriebenen zwei Bildern, bzw. nur zwei Farbfilterungen Anwendung finden, sondern kann entsprechend der Notwendigkeit und der Anzahl der zu analysierenden Farbbereiche vervielfacht werden. Aus diesen virtuellen Bildern, d.h. den Bildern nach der Farbfilterung, wird nun jeweils ein Farbparameter ermittelt, der der gleichen Art ist, aber die Eigenschaft hat, bei einem Aerosol, bzw. verschiedenen Aerosolen einen unterschiedlichen Wert bei der Extraktion aus dem jeweiligen Bild anzunehmen. Wenn möglich und geeignet, kann die Bestimmung des virtuellen Bildes auch entfallen, wenn sich der gewünschte Parameter auch ohne diesen Schritt ermitteln lässt, z.B. direkt aus dem Originalbild.

Die ermittelten Werte des Parameters werden in einer geeigneten Art und Weise miteinander verglichen, so dass es möglich ist, zu erkennen, ob, je nach Anwendungsfall, ein Aerosol überhaupt vorhanden ist, ein bestimmtes Aerosol vorhanden ist, welches Aerosol vorhanden ist und/oder welche Dichte (Konzentration) das Aerosol besitzt.

Vorteilhafter Weise kann, wenn Nebel bzw. ein Aerosol mit hoher Dispersion bzw. Rückstrahlung auftritt, eine Eigenblendung vermieden werden, die entstehen würde, wenn beispielsweise mit Fernlicht eine Nebelwand angeleuchtet wird und das reflektierende Licht den Fahrer blendet.

Vorteilhafter Weise kann mit dem erfindungsgemäßen Verfahren ein Aerosol genauer bestimmt werden und Fehlinterpretationen vermieden werden, wie sie bisher häufig vorkamen, wenn beispielsweise eine Schneedecke die Fahrbahn bedeckt, die Kamera diese aufnimmt und das Bild dann ähnlich aussieht wie die Sichtverhältnisse bei Nebel.

Durch die in den abhängigen Ansprüchen aufgeführten Maßnahmen sind vorteilhafte Weiterbildungen und Verbesserungen des im unabhängigen Anspruch angegebenen Verfahrens möglich.

Vorteilhaft kann das Verfahren für bestimmte Aerosole, z. B. Nebel, angewendet werden, indem die erste Farbfilterung einen Rotanteil im Bild bestimmt und eine zweite Farbfilterung nicht stattfindet, so dass hier der Grauanteil bestimmt wird. Der Rotfilter kann so ausgebildet sein, dass er nur für genau eine Wellenlänge im roten Bereich durchlässig ist, oder für ein ganzes Frequenzband, in dem sich zumindest ein Teil des roten Spektrums befindet. Das virtuelle Graubild mit dem Grauanteil kann je nach Vorrichtung direkt aus dem Ursprungsbild übernommen werden oder z. B. durch Löschung oder Mittelung der Farbinformation, falls ein Farbbild im Original vorliegt, ermittelt werden. Bei Vorrichtung wie beispielsweise einer R3I-Kamera kann dies durch Ausmaskieren der jeweiligen Pixel geschehen, wobei die eine Maske die roten Pixel filtert und die anderen ausblendet und die andere Maske die Graupixel filtert und die Rotpixel ausblendet, bzw. nicht vorhanden ist, da die Pixelsensoren den Grauwert direkt liefern.

Zusätzlich zu diesen beiden Farbfilterungen mögen noch weitere hier nicht erwähnte Filter- und Auswertemöglichkeiten hinzukommen. So wäre eine zusätzliche Blaufilterung denkbar, mittels der eine Plausibilisierung des Ergebnisses durchgeführt werden kann. So würde bei der Erkennung von Nebel der Rotanteil eine starke Filterung erfahren, da Nebel in diesem Frequenzbereich besonders stark absorbiert und hingegeben im Blaubereich entsprechend weniger absorbiert.

Vorteilhafter Weise wird als Parameter der mittlere Helligkeitswert der Pixel des Bildes gewählt. So kann die Lichtintensität (Helligkeit) zwischen dem auf die ein oder andere Weise farbgefilterten Bild bestimmt werden, um später damit den Vergleich durchzuführen. Da ein Aerosol üblicherweise als flächige diffuse Erscheinung auftritt und ein kontrastarmes Bild verursacht, wird der Mittelwert der Helligkeitswerte der Pixel gebildet. Dadurch wird die spektrale Intensitätsverteilung des Bildes mit dem vermeintlichen Aerosol ermittelt.

Alternativ kann als Parameter auch der mittlere Gradient der Pixel des Bildes gewählt werden. Der Gradient zweier Pixel bestimmt sich aus der Differenz ihrer Helligkeitswerte. Dieser Gradient wird nun gemittelt, um damit ein Maß zu erhalten, welches den Kontrast wiedergibt. Für Nebel typisch ist ein flacher Gradient. Ein hoher Gradient wäre ein Indiz dafür, dass sich in einer Teilfläche des Bildes ein angestrahltes Verkehrsschild o.ä. befindet. Das Vorhandensein solcher Objekte könnte zu einer fehlerhaften Nebeldetektion führen, sobald hohe Rotanteile (aufgrund deren Reflektionscharakteristik) in der Teilfläche vorhanden sind. Die Auswertung des Gradientenkriteriums verhindert dies dadurch, dass bei hohen Gradienten die Nebelmeldung unterdrückt wird.

Die Gradientenbildung zwischen den Pixeln kann bekanntermaßen in eine oder zwei, gegebenenfalls auch mehrere Richtungen stattfinden (die dann z.B. gemittelt werden), um nicht nur den Kontrast in eine Richtung, sondern den Kontrast richtungsfrei bestimmen zu können.

Vorteilhafter Weise wird für dieses Verfahren eine verhältnismäßig geringe Rechenleistung benötigt, im Vergleich zu anderen Verfahren, die beispielsweise eine Objektbestimmung durchführen müssen oder eine Bildhistorie auswerten müssen.

Vorteilhafter Weise werden die wenigstens zwei Werte des Parameters durch die Bildung einer Differenz bewertet. Dadurch wird der beschriebene Vergleich der beiden Parameterwerte durchgeführt. Üblicherweise wird diese Differenz mit einem Schwellwert verglichen, bei dessen Über- bzw. Unterschreiten ein Aerosol erkannt oder nicht erkannt wird.

Die Differenz kann (gegebenenfalls ohne diskrete Schwellwertbetrachtung) auch ein Maß für die Dichte des Aerosols sein. Die Dichte (Konzentration) ist proportional zur Anzahl der Nebeltröpfchen pro Volumeneinheit.

Verschiedene Schwellwerte bzw. Wertebereiche der Differenz können eine Aussage über die Art des Aerosols und damit eine Klassifizierung liefern. Welche Schwellwerte, bzw. Grenzen, bzw. Zusammenhänge hierfür genau verwendet werden, hängt von den physikalischen Eigenschaften des jeweiligen Aerosols, das bestimmt werden soll, ab.

Bei ausschließlicher Verwendung des Verfahrens bei Nacht, z.B. zur Verhinderung eines Aufblendens des Fernlichts bei Nebel, ist die Betrachtung der Differenz ausreichend.

Anstatt der Bildung einer Differenz ist auch die Bildung eines Quotienten aus den beiden Parameterwerten denkbar. Die Betrachtung des Quotienten hätte den Vorteil, dass ein Vergleich mit einem gegebenen Schwellwert auch bei unterschiedlichen Lichtverhältnissen (Tag/Nacht) erfolgen kann, da dieser eine Unabhängigkeit vom Helligkeitsbereich bewirkt, da das Helligkeitsniveau sich bei der Quotientenbildung quasi heraus kürzt. Der Quotient sagt somit aus, welchen Anteil einer Farbe im Graubild vorhanden ist.

Weiterhin kann auch die Varianz aus diesen Werten gebildet werden. Die Varianz kann als schnellere Bestimmung der Strukturiertheit des Bildes herangezogen werden. Sie ist definiert als das arithmetische Mittel der quadrierten Abstände einer Menge von Messwerten (hier: Pixel-Helligkeitswerte) zu ihrem Mittelwert. Es wäre somit sinnvoll, die Varianz der Helligkeitswerte der Pixel im Rotbild, sowie die Varianz der Pixel des Graubildes zu berechnen (bzw. die jedes gewünschten Farbkanals bei RGB). Wenn diese Werte größer als ein Schwellwert sind, so kann man eine strukturierte Szene annehmen, was ein Indiz dafür ist, dass es sich nicht um ein Aerosol handelt. Insbesondere ist hierbei die Varianz der Grauwerte zum Mittelwert ins Auge zu fassen, was der Frequenz im Bild entspricht.

Weiterhin kann ein Vergleich auch mittels einer Kombination der Grauwertverteilungsinformation durchgeführt werden. Es handelt sich um die Verteilung der Grau- bzw. Rotwerte (wenn man von einer Gauß'schen Verteilung ausgeht, so meint es die Varianz und den Mittelwert).

Für die Durchführung des Vergleiches gilt Analoges, wie oben am Beispiel der Differenz beschrieben.

Vorteilhafter Weise kann die erfindungsgemäße Prüfung durch Vergleich der Parameterwerte mit einem weiteren Schwellwerten durchgeführt werden. Hierbei wird zusätzlich die Differenz der Parameterwerte gegen einen zweiten Schwellwert geprüft werden, der über den ersten Schwellwert liegt, also überschritten wird, wenn z.B. die Helligkeit des Grauwerts noch größer ist, als die des Rotwerts. Dies liefert eine Aussage über mögliche Überbelichtungen, oder große Helligkeiten, z.B. durch ungewollte Reflexionen (des eigenen Scheinwerferlichts z.B. an Schildern) oder aktiven Lichtquellen (z.B. Scheinwerfer eines entgegenkommenden Fahrzeugs), die unter Verwendung nur eines Schwellwerts fälschlicherweise auch als Aerosol klassifiziert werden würden. Dies kann beispielsweise auftreten, wenn hinter einer voraus liegenden Kuppe ein Fahrzeug entgegenkommt und dessen Scheinwerfer plötzlich sichtbar werden.

Mit der Variante der Quotientenbildung aus der Helligkeit zwischen Grau- und Rotwert, ist dies jedoch nicht möglich.

Das Aerosol wird (bzw. das eventuell vorhandene Aerosol) mittels eines oder mehrerer Scheinwerfer angeleuchtet. Solche Lichtquellen besitzen ihre eigene spektrale Charakteristik, wodurch durch geschickte Wahl eines geeigneten Scheinwerfers aufgrund der ihm innewohnenden spektralen Charakteristik der bereits beschriebene physikalische Effekt zur Aerosolerkennung verstärkt wird und somit eine Erkennung erleichtert wird. Dies geschehet indem indem die spektrale Charakteristik des mindestens eines Scheinwerfers bei der Auswertung Berücksichtigung findet.

Die spektrale Charakteristik des Scheinwerfers bezeichnet das Spektrum, das der Scheinwerfer aussendet, d. h. welche Wellenlängen in welchen Intensitäten. Die Berücksichtigung bei der Auswertung kann dadurch geschehen, dass z. B. Schwellwerte angepasst werden oder ein geeignetes Vergleichsverfahren gewählt wird, oder ein bestimmter Parameter bestimmt wird, der der speziellen Charakteristik des gewählten Scheinwerfers entgegenkommt.

Vorteilhafter Weise findet eine Faltung des Spektrums des gewählten Scheinwerfers mit der Absorptionscharakteristik eines zu erkennenden Aerosols statt. Das Spektrum des Scheinwerfers ist bekannt, genauso wie das Spektrum (oder invers die Absorptionscharakteristik) eines zu erkennenden Aerosols. Durch die Faltung (quasi eine Multiplizierung der Dämpfung der einzelnen Wellenlängen - aus der Signalverarbeitung bekannt) kann das zu erwartende Spektrum ermittelt werden, welches im Bild auftreten sollte, wenn ein entsprechendes Aerosol vorliegt. Für eine, wie beispielsweise beschrieben wurde, diskrete Auswertung können nun die Schwellwerte für einzelne Wellenlängen in Abhängigkeit des Aerosols und des Scheinwerfers ermittelt werden. Eine komplette Spektralauswertung ist natürlich genauso möglich. Durch Berücksichtigung der Scheinwerfercharakteristik kann eine genauere Bestimmung durchgeführt werden. Soll bestimmt werden, welcher Art das Aerosol im Bild ist, so muss für jedes möglicherweise vorkommende (bzw. zu erkennende) Aerosol diese Faltung mit dem Spektrum des Scheinwerfers durchgeführt werden, wodurch sich mehrere Schwellwerte und damit Klassen ergeben und der Vergleich mit dem tatsächlich auftretenden Spektrum im Bild eine Klassifikation ermöglicht.

Für die Nebelerkennung im Speziellen (gegebenenfalls auch für andere Aerosole) würden sich Xenonscheinwerfer oder Scheinwerfer, die aus LED-Elementen bestehen, gut eignen, da sie ein verstärkt bläuliches Spektrum besitzen, welches gefaltet mit dem Spektrum vom Nebel eine deutliche Dämpfung im roten Bereich aufzeigen würde. Diese Dämpfung ist deutlicher, als sie entstehen würde, wenn der Nebel mit weißem Licht angestrahlt werden würde.

Zweckmäßiger Weise wird die Ermittlung der Parameter nur unter Berücksichtigung eines Ausschnitts des Bildes durchgeführt. Gelingt die Wahl eines geeigneten aussagekräftigen Bildausschnitts, so verringern sich Rechenlast und Rechenzeit, und es werden Ressourceneinsparungen ermöglicht.

Vorteilhaft ist die Wahl des Ausschnitt des Bildes (Region of Interest - ROI) dann gelungen, wenn in diesem eine möglichst gute Ausleuchtung vom Scheinwerfer gegeben ist. Der zu beobachtende Effekt, d.h. der Unterschied zwischen mittleren Rot- und Grauwert ist dann am höchsten, wenn eine möglichst große Fläche der ROI möglichst stark angestrahlt wird. Deshalb sollte die Hell-Dunkel-Grenze möglichst außerhalb der ROI liegen. Die Hell-Dunkel-Grenze ist die Linie, die vom Scheinwerfer vorgegeben wird, in der der ausgeleuchtete Bereich in den dunklen unausgeleuchteten übergeht.

In einer Weiterbildung kann der Bildausschnitt nicht nur fix im Bild gewählt werden, sondern sich adaptiv den Umgebungsbedingungen anpassen. So ist denkbar, optional noch ein Fahrbahnmodell oder die Topologie (z. B. Kurven, Kuppen oder Senken) zu berücksichtigen und den Ausschnitt so zu wählen, dass die Aerosolerkennung in einem Bereich durchgeführt wird, der für den weiteren Fahrtverlauf sinnvoll ist.

Da es sehr sinnvoll sein kann, den Ausschnitt in den oben beschriebenen ausgeleuchteten Bereich zu legen, bietet sich eine Nachführung des Ausschnitts an einen möglichen adaptiven Scheinwerfer (Leuchtweitenregelung, Kurvenlicht) an.

Der Bildausschnitt kann sich auch gleichmäßig zum Lenkrad/Lenkwinkel bewegen, genauso wie es auch das adaptive Kurvenlicht tut. Hierbei wird die Grundidee unterstützt, wonach der Ausschnitt gewählt werden sollte, der am stärksten durch das Licht erhellt wird, da dort der höchste Effekt der spektralen Unterdrückung des Rotwertes (bei Nebel) ist.

Vorteilhaft ist die Plausibilisierung der erfindungsgemäß beschriebenen Aerosolerkennung mit weiteren Daten, die Aufschluss über ein vorhandenes Aerosol geben. Da eine Fehlerkennung nie zweifelsfrei auszuschließen ist bzw. störende Einflüsse, wie z. B. fremde Lichtquellen mit unbekanntem Spektrum, sich verfälschend auf das Ergebnis auswirken können, ist eine solche Maßnahme sinnvoll. Durch eine solche Plausibilisierung können Falsch-Positiv-Erkennungen von Aerosolen weiter eingeschränkt werden.

Eine Plausibilisierung kann mit bekannten Verfahren, beispielsweise mit denen im Stand der Technik beschriebenen durchgeführt werden oder anderen, wie z. B. einer Sichtweitenbestimmung, bei der ab einer bestimmten Sichtweite das Vorhandensein eines Aerosols ausgeschlossen wird. Weiterhin kann eine Plausibilisierung mittels einer Gradientenbestimmung stattfinden, wobei niemals auf ein Aerosol erkannt wird, wenn der mittlere Gradient im Bild (idealerweise Graubild) einen bestimmten Schwellwert überschreitet, was bedeutet, dass ein Kontrastreichtum (d.h. Struktur im Bild) vorhanden sein muss, der nicht mit einem Aerosol einer bestimmten Dichte in Einklang zu bringen ist. Weiterhin kann zur Plausibilisierung eine oder mehrere externe Lichtquellen erkannt werden und gegebenenfalls bestimmt werden, ob diese ein Halo oder Korona besitzen. Ist dies nicht der Fall, so kann kein Aerosol zwischen dieser Lichtquelle und der Kamera vorhanden sein.

Für die Erkennung, ob eine Blendung eine Eigenblendung, beispielsweise durch Nebel oder eine Fremdblendung, beispielsweise durch andere Fahrzeuge ist, kann z. B. eine Objekterkennung herangezogen werden, die gegebenenfalls die anderen Fahrzeuge erkennt. Auch eine Reflexion an angestrahlten Schildern könnte fälschlicherweise als Nebel erkannt werden. Auch hier würde eine Plausibilisierung beispielsweise mittels einer Objekterkennung helfen.

Vorteilhafter Weise kann die Erkennung eines Aerosols zu vielerlei Zwecken im Fahrzeug sinnvoll verwendet werden. Die Information über das Vorliegen eines Aerosols bzw. eines bestimmten Aerosols bzw. dessen Konzentration kann sinnvoller Weise dazu dienen, Sicherheits-/Komfort-/Fahrerassistenz- oder Anstriebsstrangfunktionen positiv zu beeinflussen.

Wird beispielsweise ein Sicht behinderndes Aerosol (z. B. Nebel) erkannt, so kann eine vorteilhafte Lichtverteilung (bei Nebel z. B. eine tiefe, breite Ausleuchtung vor dem Fahrzeug) aktiviert werden. Wenn dank des erfindungsgemäßen Verfahrens kein Nebel erkannt wird, obwohl beispielsweise das Bild eine geschlossene Schneedecke auf der Fahrbahn aufzeigt, die normalerweise nicht von einer Nebelwand unterschieden werden könnte, wird umgekehrt die Lichtverteilung nicht geändert bzw. so eingestellt, dass sie einer weiten Sicht dienlich ist. In diesem Fall könnte das Fernlicht aktiviert oder beibehalten werden, selbstverständlich unter Berücksichtigung weiterer bekannter Randbedingungen wie Vermeidung der Blendung des Gegenverkehrs, etc.

Die automatische Aktivierung und Deaktivierung einer Nebelschlussleuchte oder Nebelscheinwerfern ist ohne Weiteres denkbar.

Am Beispiel der Lichtsteuerung wird dargelegt, wie auch für die Aktivierung einer Fahrzeugfunktion eine Plausibilisierung ermöglicht wird. So kann auf eine Änderung der Scheinwerfereinstellung selbst bei erkanntem Nebel (schlechte Sicht) auf eine Änderung der Einstellung verzichtet werden, wenn es Tag und nicht Nacht ist. Dies kann z.B. mittels eines Lichtsensors (auch als Funktion mittels der beschriebenen Kamera realisierbar oder klassisch als eigenständiger Sensor) und einem Schwellwert ermittelt wird. Weiterhin kann eine Änderung der Scheinwerfereinstellung unterbleiben, wenn die Geschwindigkeit des Fahrzeugs gering ist und nicht über einem Schwellwert liegt.

Falls das Verfahren zur Lichtsteuerung verwendet wird und gleichzeitig der unerwünschte Effekt einer Beleuchtung durch ein Entgegenkommen des Fahrzeugs eintritt, der eventuell die Nebelerkennung verfälschen würde, so hätte dies keine Auswirkungen, da in diesem Fall ohnehin abgeblendet werden sollte. Zumindest wäre die Lichtsteuerung daher teilimmun gegen solche unerwünschten Effekte.

Sicherheitssysteme wie Gurtstraffer, Airbags oder Bremsassistenten/Bremssysteme könnten in geeigneter Weise vorgespannt oder alarmiert werden, wenn von einem erhöhten Unfallpotential (wie bei schlechter Sicht) auszugehen ist.

Komfortsysteme könnten von Außenluft auf Umluft umschalten oder (Luft)filter aktivieren, wenn bestimmte Aerosole, z.B. Rauch, Industriegas, erkannt wurden. Fahrerassistenzsysteme könnten die Daten, die sie aus dem Videobild ermitteln, unter schlechten Sichtverhältnissen als weniger relevant oder brauchbar einstufen als beispielsweise die Daten von anderen Sensoren (z.B. Radar, Ultraschall) einstufen.

Der Antriebsstrang kann dahingehend beeinflusst werden, dass beispielsweise die Drehzahl erhöht wird, um eine stärkere Motorbremsung zu ermöglichen oder ein lauteres Fahrgeräusch zu erzeugen, welches die Umgebung vor dem herannahenden Fahrzeug warnen könnte.

Geschwindigkeits- und/oder Lenkeingriffe können durchgeführt werden um lokalen Aerosolen auszuweichen oder bei Nebel die Geschwindigkeit zu senken oder eine Warnung auszugeben. Dies kann in Kombination mit Daten aus einem Navigationssystem stehen, welches Ausweichmöglichkeiten, bzw. die Befahrbarkeit von voraus liegendem Terrain beurteilen kann.

Abhängig von der Art des Aerosols kann auch eine Warnung vor dem Aerosol oder ein Notruf abgesetzt werden, beispielsweise, wenn dieses giftig ist.

### Begriffserläuterungen

Spektroskopie bzw. Spektrometrie ist eine Gruppe von Beobachtungsverfahren, die anhand des Spektrums (Farbzerlegung) von Lichtquellen (auch dem zu analysierenden Bild) untersuchen, wie elektromagnetische Strahlung und Materie in Wechselwirkung stehen. Man untersucht, bei welchen Frequenzen oder Wellenlängen eine Substanz Energie in Form von Lichtquanten bzw. elektromagnetischen Wellen aufnehmen (absorbieren) oder abgeben (emittieren) kann. Diese Farbzerlegung kann mittels einer oder mehrerer Filterungen durchgeführt werden.

Das für die Erfindung notwendige bildgebende Verfahren kann durch ein Kamerasystem mit folgenden Eigenschaften realisiert werden: Es muss Bilder liefern, die sich für eine Farbfilterung eignen. Dies kann eine klassische RGB-Kamera oder z.B. eine R3I-Kamera sein. Bei letzterer ist jedes 4. Pixel mit einer Rotmaske versehen, nimmt also nur den Rotanteil auf (selektive Pixelfärbung). Bei Betrachtung nur dieser Pixel, erhält man somit ein Rotbild, bei der Betrachtung der anderen Pixel ein Graubild. Alternativ kann auch ein Kamerasystem mit 2 Monokameras oder mehreren optischen Wegen mit unterschiedlicher Filterung zum Einsatz kommen, oder auch eine Stereokamera deren 2 Lichtwege durch unterschiedliche Filter laufen.

Ein Aerosol ist ein Gemisch aus festen oder/und flüssigen Schwebeteilchen und einem Gas, die unterschiedlichen Ursprungs sein können. Teilchen von primären Aerosolen stammen meistens aus mechanischen oder thermischen Prozessen. Bei den sekundären Aerosolen haben sich die Teilchen aus gasförmigen Stoffen durch chemische Reaktion und/oder durch Anlagerung der Reaktionsprodukte an Kondensationskerne gebildet. Aerosole können natürliche organische Anteile (Pollen, Sporen, Bakterien), natürliche anorganische Anteile (Staub, Feinstaub, Sand, Rauch, Seesalz, Wassertröpfchen), vom Menschen eingebrachte Verbrennungsprodukte (Rauch, Zigarettenrauch, Abgase, Industriegase, Qualm, Ruß oder Ölqualm (z.B. aus einem Autoauspuff ), Asche oder Stäube) oder vom Menschen hergestellte Nanopartikel sein.

Der Begriff Hydrometeor ist der in der meteorologischen Fachsprache benutzte Oberbegriff für alle Formen kondensierten Wassers (Wortteil "Hydro"), die in der Atmosphäre beobachtet werden (Wortteil "Meteor"), also alle flüssigen und gefrorenen Teilchen aus Wasser. Andere feste und flüssige Bestandteile der Atmosphäre, bei deren Zusammensetzung Wasser keine oder zumindest fast keine Rolle spielt, werden als Aerosole bezeichnet. Ansammlungen von Hydrometeoren sind feuchter Dunst, Gischt, Kondensstreifen, Nebel, Nieselregen, Regen, Schneefegen, Wolken u. a.

Erfindungsgemäß werden Hydrometeore (oder deren Ansammlungen) auch beansprucht, wenn Aerosole erwähnt sind. Ob Hydrometeore von Aerosolen abgegrenzt werden oder eine Untermenge dieser darstellen, ist in der Literatur teilweise widersprüchlich.

Als Dämpfung bezeichnet man in der Physik die Umwandlung von Schwingungsenergie in eine andere Energieform. Dies äußert sich beispielsweise in einem Abklingen eines Signals, einer Schwingung oder einer Welle. Elektromagnetische Wellen werden in der Atmosphäre gedämpft. Bei der Absorption von Licht wird die aufgenommenen Energie nicht nur in Wärme umgewandelt, sondern kann durch andere Mechanismen wie Fluoreszenz, sowie durch Streuung an Aerosolen verlorengehen. Vorliegend haben die Begriffe Absorption und Dämpfung eine ähnliche Bedeutung. Die Transmissivität hingegen entspricht dem Inversen, nämlich der Durchlässigkeit für Licht (frequenzabhängig) in einem Aerosol.

### (Quelle teilweise Online-Enzyklopädie Wikipedia)

### Beschreibung der Zeichnungen

Ausführungsbeispiele der Erfindung sind in den Zeichnungen dargestellt und in der nachfolgenden Beschreibung näher erläutert.

Es zeigen
Figur 1 ein von einer Kamera aufgenommenes Bild mit einem Nebelszenario,
Figur 2 ein Blockschaltbild zum Aufbau des erfindungsgemäßen Verfahrens (Vorrichtung),
Figur 3 eine Spektralanalyse mit und ohne Nebelszenario,
Figur 4 ein Ablaufdiagramm für eine Lichtsteuerung mittels der erfindungsgemäßen Nebelerkennung.

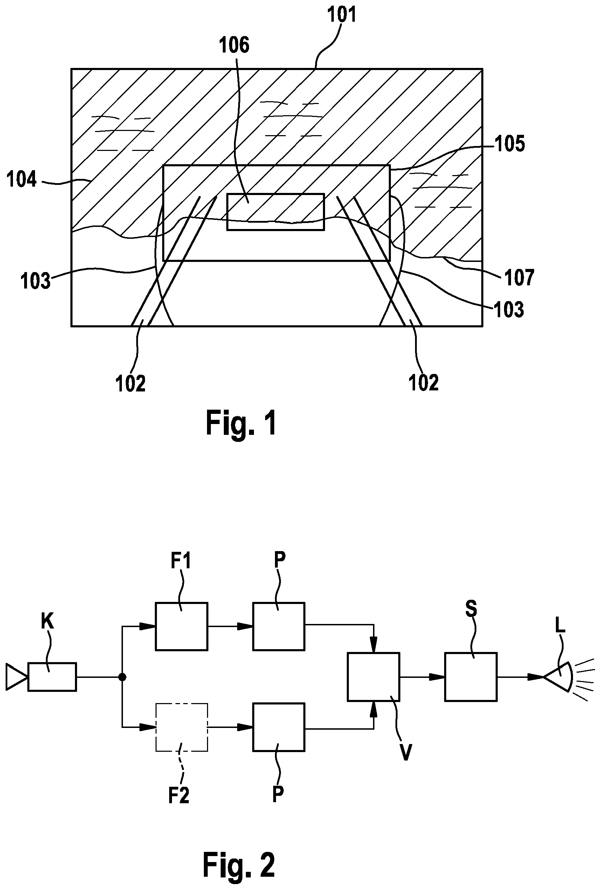

In Figur 1 ist ein Bild 101 dargestellt, wie es von einer Kamera im Fahrzeug in Voraussicht aufgenommen sein könnte. Es ist ein Nebelszenario mit dem Nebel bzw. der Nebelwand 104 sichtbar, in das die Spurmarkierung 102 hinein verläuft und mit zunehmender Entfernung weniger sichtbar ist. Der Lichtkegel 103 führt nahe am Fahrzeug zu einer teilweise Erleuchtung der Szenerie und mit zunehmender Entfernung zu einer Erleuchtung des Nebels 104, wobei das Licht von diesem zurückgestreut wird und es zu einer Blendung, vor allem im Blendungsbereich 105 kommen kann. Mit der Sichtgrenze 107 ist eine virtuelle Linie definiert, bis zu der eine Ausleuchtung Sinn machen mag. In der Realität wird diese Linie aufgrund der kontinuierlichen optischen Eigenschaften des Nebels nicht scharf abzubilden sein. Die Anwendung des erfindungsgemäßen Verfahrens kann beispielsweise auf den Bildausschnitt der Messregion 106 (Region of Interest, ROI) beschränkt werden, der idealer Weise an der Sicht bzw. Hell-Dunkel-Grenze liegt bzw. diese beinhaltet.

In Figur 2 ist der Aufbau des erfindungsgemäßen Verfahrens (Vorrichtung) erläutert, wobei ausgehend von der Videokamera K, die ein Bild 101 liefern kann, eine Filterung F1 durchgeführt wird, die ein (virtuelles) Farbbild mit einer gewünschten Farbinformation ergibt. F1 ist dabei in dieser Ausgestaltung ein Filter, dass vorzugsweise die Frequenzanteile, die nicht im roten Bereich liegen, ausfiltert. Man erhält durch die Filterung F1 ein sogenanntes Rotbild, bzw. den Rot-Anteil. Optional kann eine zweite Farbfilterung F2 Anwendung finden. In der beschriebenen Ausführung zur Nebelerkennung eignet sich jedoch auch das originale Graubild, so dass keine zweite Farbfilterung vorgenommen werden muss. Aus den beiden durch F1 bzw. F2 ermittelten Bildern werden nun jeweils die Werte des selben Parameters P ermittelt. Insbesondere kann das der mittlere Helligkeitswert der Pixel der Messregion 106 in ihrer jeweiligen farblichen Filterung F1 und F2 bzw. nur F1 sein. In diesem Fall würde sich jeweils ein skalarer Wert M_{G}, M_{R} ergeben, der die mittlere Helligkeit repräsentiert und in einem Vergleicher V zur Auswertung kommt, beispielsweise durch eine Differenzbildung D der beiden Skalare M_{G}, M_{R} und einer Prüfung, ob diese Differenz einen gewissen Schwellwert über- oder unterschreitet. Im Falle der Nebelerkennung würde, wenn die Differenz zwischen dem Mittelwert der Helligkeit des Graubildes und der Mittelwert der Helligkeit des Rotbildes einen bestimmten Wert überschreitet, das Vorhandensein von Nebel angenommen werden.

Die oben erwähnte Prüfung der Differenz gegen einen zweiten Schwellwert ist hier nicht dargestellt, kann an dieser Stelle aber ebenso durchgeführt werden.

Die Wahl eines geeigneten Schwellwerts ergibt sich aus empirischen Versuchen oder physikalischen Überlegungen. Wurde nun Nebel detektiert, so kann ein Steuergerät S, welches für die Lichtsteuerung zuständig ist, die Scheinwerfer L entsprechend ansteuern. Insbesondere, falls eine vermeintliche Blendung (d. h. eine hohe Helligkeit im Bild bzw. im Blendungsbereichs 105) auftritt, muss geprüft werden, ob Nebel vorhanden ist und somit eine Blendung vorliegt und nicht eine hell erleuchtete Szenerie, was wiederum gewünscht wäre. Bei Erkennung von Nebel könnte z. B. das Fernlicht deaktiviert und/oder Nebellicht aktiviert werden.

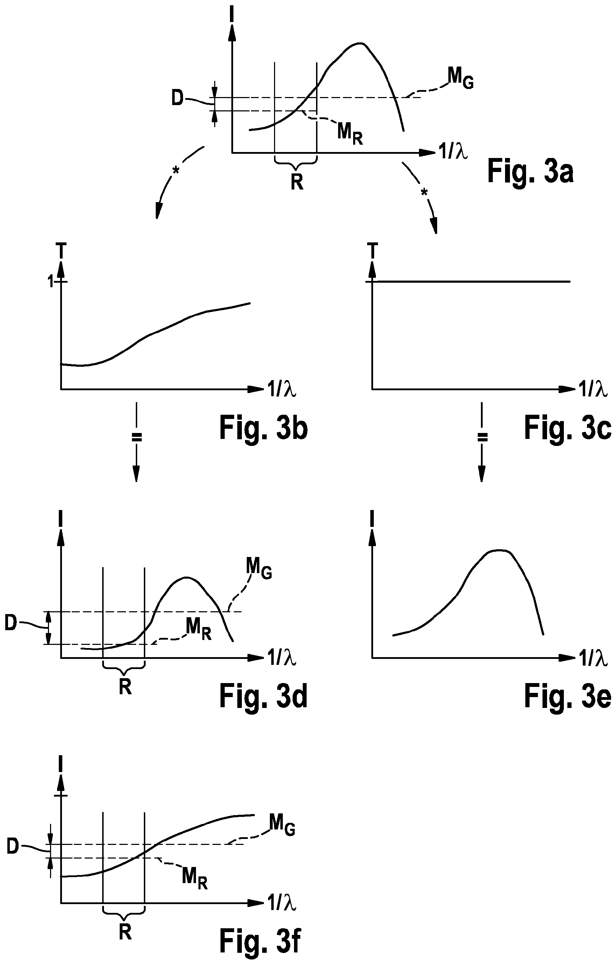

In Figur 3 ist der physikalische Zusammenhang grafisch dargestellt.

In Figurteil a) ist das Spektrum eines Xenonscheinwerfers dargestellt, dessen Intensität bzw. Helligkeit I im blauen Bereich, d. h. in Bereichen höherer Frequenz, bzw. kürzerer Wellenlänge λ höher ist als im niederfrequenten (roten) Bereich. Diesem Spektrum kann ein Mittelwert der Intensitäten über alle Frequenzen zugeordnet werden, was dem mittleren Grauwert M_{G} entspricht. Eine erfindungsgemäße Rotfilterung kann derart ausgebildet sein, dass sie nur das Spektralband R berücksichtigt, das heißt im Wesentlichen alle Frequenzanteile, die nicht im Spektralband R liegen, ausfiltert. Auch den Helligkeitswerten in diesem Spektralband R kann ein mittlerer Helligkeitswert M_{R} als Mittelwert der Intensitäten über alle Frequenzen im Band R zugeordnet werden. Die beiden spektralen Helligkeitswerte M_{G} und M_{R} unterscheiden sich durch eine Differenz D. Diese Differenz ändert sich abhängig vom Vorhandensein eines Nebels, wie im Folgenden dargestellt wird. Durch die Auswertung dieser Differenz wird der erfindungsgemäße Vergleich ermöglicht. Alternativ kann zwischen diesen mittleren Helligkeitswerten auch der Quotient oder andere in der Erfindung beschriebene Kombinationen gebildet werden.

In den Teilfiguren b) und d) ist nun die Fortführung des Szenarios im Falle des Vorhandenseins von Nebel und in den Figurteilen c) und e) die Fortführung des Verfahrens ohne Nebel dargestellt.

Im Figurteil b) ist die spektrale Transmissionscharakteristik von Nebel dargestellt, wobei eine höhere Dämpfung (geringere Transmissivität T) im niederfrequenten, z. B. dem roten Bereich und eine geringere Dämpfung für höhere Frequenzen auftritt. Im Figurteil c) ist der triviale Fall einer guten Sicht, d.h. keiner Dämpfung dargestellt.

Werden nun diese Absorptionscharakteristiken mit dem Scheinwerferspektrum in Figurteil a) gefaltet * so resultieren die in den Figurteilen d) und e) gezeigten Intensitätskurven, wobei die Kurve in Figurteil e) der ursprünglichen in Figurteil a) entspricht, da keinerlei Dämpfung (1/T) stattfand. Einflüsse durch das Bildmotiv oder andere Lichtquellen sind hier nicht berücksichtigt. Diese dürften sich aufgrund der dynamischen Bildänderungen während einer Fortbewegung herausmitteln.

Im Figurteil d) ist der im Bild der aufnehmenden Kamera festzustellende Spektralverlauf dargestellt, wenn mit einem Scheinwerfer entsprechend Figurteil a) bei Vorhandensein des Nebels mit einer Dämpfungscharakteristik wie im Figurteil b) das Bild aufgenommen wurde. Die hier durchgeführte Ermittelung der Mittelwerte der Helligkeit M_{G} und M_{R} wird entsprechend dem erfindungsgemäßen Verfahren aus dem Bild ermittelt.

Die im Figurteil a) für den Scheinwerfer auftretenden (unbeeinflussten) Mittelwerte der Helligkeit ergeben sich bereits aus der bekannten Charakteristik des Scheinwerfers und sind bekannt. Sie können, da sie ja im Betrieb nicht über die Kamera gemessen werden können, zur Auswertung hinterlegt/konfiguriert werden und das erfindungsgemäße Verfahren verbessern.

So ist der Effekt des Nebels deutlich in einer Vergrößerung der Differenz der Mittelwerte V des Figurteils d) im Vergleich zum Figurteil a) sichtbar.

Im Figurteil f) hingegen ist die im Bild wahrgenommene Spektralverteilung dargestellt, wie sie gemessen werden würde, wenn die Charakteristik des Scheinwerfers nicht bekannt wäre bzw. keine übergewichteten spektralen Anteile besäße oder kein Scheinwerfer angeschaltet ist (z.B. bei Tag). Hierbei wäre die Differenz V der Mittelwerte der Helligkeiten zwar messbar, erkennbar ist aber die Verstärkung bzw. Vergrößerung der Differenz bei Verwendung entsprechender Scheinwerfer, wie in Figurteil a) und d) dargestellt. Durch den verstärkenden Effekt der Scheinwerfer mit bekannter Charakteristik können beispielsweise die Schwellwerte für eine Nebelerkennung größer gewählt werden, so dass weniger falsche Nebelerkennungen vorkommen. Umgekehrt muss berücksichtigt werden, dass solche Scheinwerfer bewirken können, dass eine im Bild aufgenommene Szenerie ohne Nebel auch verstärkt die spetrale Charakteristik der Scheinwerfer aufweisen kann, was diesen Effekt wieder dämpfen könnte. Empirische Untersuchungen haben jenen Vorteil jedoch bestätigen können.

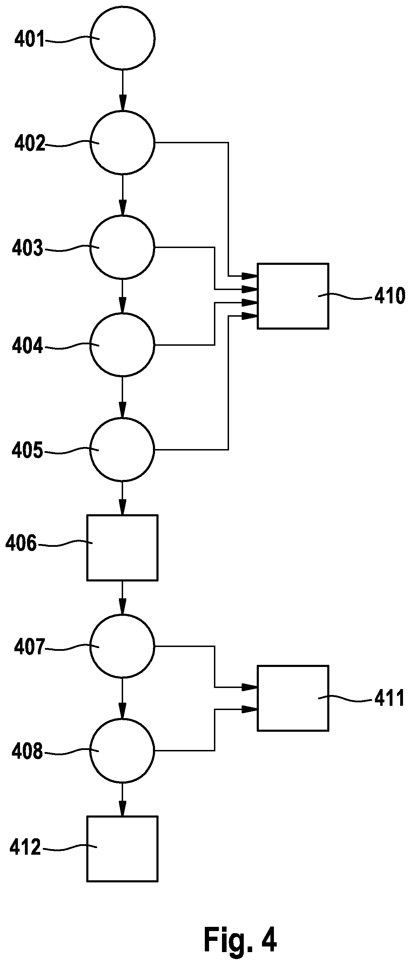

In Figur 4 ist ein Ablaufdiagramm dargestellt, wie es für eine Lichtsteuerung implementiert werden könnte, wobei das erfindungsgemäße Verfahren zur Nebelerkennung Anwendung findet. Es wird von einem Startpunkt 401 ausgegangen, der beispielsweise iterativ in bestimmten Zeitabständen aufgerufen werden kann. Die hier vorgestellten Elemente und Tests können auch selektiv verwendet werden, genauso können weitere sinnvolle Punkte in den Ablauf eingefügt bzw. die Reihenfolge des Ablaufs geändert werden.

Es wird eine Sichtweitenbestimmung 402 durchgeführt, die beispielsweise dadurch realisiert werden kann, indem z.B. geprüft wird, ob die Vorausschauweite einen Schwellwert überschreitet, und wenn ja, dann wird angenommen, dass kein Nebel vorhanden ist 410. Die Vorausschauweite kann z.B. durch deinen Spurerkennungsalgorithmus (Lane Detection) festgestellt werden, wenn die Spur(markierung) noch in genügend weiter Entfernung sichtbar ist, dann ist die Sichtweite ausreichend gut.

Falls die Sichtweite für zu gering erachtet wird, wird eine Kontrastbestimmung 403 durchgeführt, die beispielsweise dadurch realisiert werden kann, dass eine Gradientenbestimmung durchgeführt wird, wobei der mittlere Gradient im Graubild einen gewissen Schwellwert überschreiten muss. Tut er dies, d. h. es ist ein entsprechender Kontrast vorhanden, so wird davon ausgegangen, dass kein Nebel 410 vorhanden ist. Falls trotzdem eine (Eigen)blendung auftritt, so kann diese von reflektierenden Schildern herrühren. Eine Unterscheidung der Ursache der Blendung ist somit möglich.

Ist hingegen auch der Kontrast zu gering, so kann weiterhin eine Lichtquellenerkennung 404 (externe Lichtquellen) durchgeführt werden und im Falle des Auftretens einer solchen geprüft werden, ob diese ein Halo oder Korona besitzt. Ist dies nicht der Fall, d. h. die Lichtquelle ist klar und deutlich sichtbar, so wird davon ausgegangen, dass kein Nebel 410 vorhanden ist.

Falls doch, so kann weiterführend das erfindungsgemäße Verfahren der spektroskopischen Nebelerkennung 405 Anwendung finden, welches, wie beschrieben, das Nichtvorhandensein von Nebel 410 oder das Vorhandensein von Nebel 406 erkennen kann. Bis zu diesem Schritt 406 wurde das Verfahren zur Nebelerkennung behandelt, im Folgenden folgt das Verfahren zur Lichtsteuerung.

Wenn Nebel 406 erkannt wurde, so prüft eine Nachterkennung 407, beispielsweise indem die Lichtmenge durch einen Lichtsensor einen bestimmten Schwellwert überschreitet, ob es gerade Nacht ist oder nicht. Falls es Tag ist, wird keine Scheinwerfereinstellung bzw. Änderung der Einstellung 411 durchgeführt, da, wenn das Licht aktiv ist, dies möglicherweise einen bewussten Wunsch/Einstellung des Fahrers darstellt.

Falls es Nacht ist, wird eine Geschwindigkeitsprüfung 408 durchgeführt, die quasi eine Sicherheitsschaltung darstellt, so dass bei geringen Geschwindigkeiten (z.B. < 50 km/h) keine Änderung der Scheinwerfereinstellung 411, insbesondere keine Aktivierung des Fernlichts erfolgt. Ist jedoch eine bestimmte Mindestgeschwindigkeit erreicht oder überschritten, so soll im Fall des Vorhandenseins von Nebel das Nebellicht aktiviert werden 412.

Wird kein Nebel 410 erkannt, so kann beispielsweise bei Vorliegen weiterer Randbedingungen (z. B. kein Gegenverkehr) Fernlicht aktiviert werden. Schnelle Wechsel zwischen erkanntem Nebel bzw. nicht erkanntem Nebel können entprellt werden, so dass die Scheinwerfereinstellung sich nicht permanent ändert bzw. zu flackern beginnt. Eine Nebelschlussleuchte kann entsprechend gesteuert werden.

## Patentansprüche

1. Verfahren zur Erkennung (405) eines Aerosols (104)
- mittels eines von einer Kamera (K) für ein Fahrzeug aufgenommenen wenigstens einen Bildes (101), wobei in einem ersten Schritt ein erster Wert eines Parameters (P) aus dem wenigstens einen Bild nach einer ersten Farbfilterung (F1) ermittelt wird und
- in einem zweiten Schritt ein zweiter Wert für den selben Parameter (P) aus dem einen Bild oder einem weiteren Bild, das von der Kamera aufgenommen wurde, ohne die erste Farbfilterung (F1) oder mit einer zweiten Farbfilterung (F2), die unterschiedlich zur ersten Farbfilterung (F1) ist, ermittelt wird, und
- die ermittelten Werte verglichen (V) werden, und
- in Abhängigkeit des Ergebnisses des Vergleichs (D) die Erkennung (410, 406) oder Dichtebestimmung oder Klassifizierung des Aerosols durchgeführt wird und
- der Parameter der mittlere Helligkeitswert (M) oder Gradient der Pixel ist wobei
- das Aerosol (104) mittels mindestens eines Scheinwerfers angeleuchtet (103) wird, **dadurch gekennzeichnet, dass**
- die spektrale Charakteristik des mindestens eines Scheinwerfers (Fig. 3a) berücksichtigt wird.

2. Verfahren nach Anspruch 1, **dadurch gekennzeichnet, dass**
- die erste Farbfilterung (F1) den Rot-Anteil (R, M_{R}) bestimmt und
- ohne eine zweite Farbfilterung (F2) der Grau-Anteil (M_{G}) bestimmt wird.

3. Verfahren nach einem der vorigen Ansprüche, **dadurch gekennzeichnet, dass**
- der Vergleich (V) der Parameter durch die Bildung einer Differenz, eines Quotienten, einer Varianz oder einer Kombination mit Grauwertverteilungsinformationen gebildet wird.

4. Verfahren nach Anspruch 3, **dadurch gekennzeichnet, dass**
- der Vergleich (V) durch die Bildung einer Differenz gebildet wird und
- die Abhängigkeit des Ergebnisses durch wenigstens zwei Schwellwertvergleiche gebildet wird, wobei
- das Aerosol dann erkannt oder klassifiziert wird, wenn der niedrigere Schwellwert über- und der höhere unterschritten wird.

5. Verfahren nach einem der vorigen Ansprüche, **dadurch gekennzeichnet, dass**
- das Ergebnis des Vergleichs (D) einem zweiten, weitergehenden Vergleich unterzogen wird,
- wobei der zweite Vergleich mit dem zu erwartenden Ergebnis des Vergleichs im Falle des Nicht-Vorhandenseins eines Aerosols durchgeführt wird.

6. Verfahren nach einem der vorigen Ansprüche, **dadurch gekennzeichnet, dass**
- eine Faltung des Spektrums (*) des mindestens eines Scheinwerfers mit der Absorptionscharakteristik wenigstens eines möglichen Aerosols (Fig. 3b) durchgeführt wird und
- in Abhängigkeit davon das Aerosol (104) erkannt (406) wird.

7. Verfahren nach einem der vorigen Ansprüche, **dadurch gekennzeichnet, dass**
- die Ermittlung der Parameter nur unter Berücksichtigung eines Ausschnitts des Bildes (106) stattfindet.

8. Verfahren nach Anspruch 7, **dadurch gekennzeichnet, dass**
- der Ausschnitt (106) so gewählt wird, dass
- in diesem eine möglichst gute Ausleuchtung durch den mindestens einen Scheinwerfer (103) gegeben ist und/oder
- dieser entsprechend dem Lenkwinkel nachgeführt wird und/oder
- dieser entsprechend der Oberflächentopologie der im Bild (101) befindlichen Szenerie eingestellt wird.

9. Verfahren nach einem der vorigen Ansprüche, **dadurch gekennzeichnet, dass**
- die Aerosolerkennung (405) mit weiteren Daten (402, 403, 404) plausibilisiert wird.

10. Verwendung des Verfahrens, nach einem der vorigen Ansprüche,
- zur Regelung der Leuchtweite oder Lichtverteilung (411, 412) des mindestens eines Scheinwerfers (L) und/oder
- Aktivierung oder Beeinflussung anderer Sicherheits-/ Komfort-/ Fahrerassistenz- oder Antriebsstrangfunktionen.

11. Vorrichtung zur Erkennung (405) eines Aerosols (104), die so ausgerichtet ist, ein Verfahren nach einem der Ansprüche 1 bis 9 durchzuführen.

## Claims

1. Method for detecting (405) an aerosol (104)
- by means of at least one image (101) recorded by a camera (K) for a vehicle, **characterized in that**,
-- in a first step, a first value of a parameter (P) is ascertained from the at least one image after a first colour filtering (F1) and,
- in a second step, a second value for the same parameter (P) is ascertained from the one image or a further image that was recorded by the camera without the first colour filtering (F1) or with a second colour filtering (F2) which differs from the first colour filtering (F1), and
- the ascertained values are compared (V), and
- the detection (410, 406) or density determination or classification of the aerosol is carried out in dependence on the result of the comparison (D) and
- the parameter is the average brightness value (M) or gradient of the pixels,
**characterized in that**
- the aerosol (104) is illuminated (103) by means of headlights, and
- the spectral characteristic of the headlights (Figure 3a) is taken into account.

2. Method according to Claim 1, **characterized in that**
- the first colour filtering (F1) determines the red component (R, M_{R}) and
- the grey component (M_{G}) is determined without a second colour filtering (F2).

3. Method according to either of the preceding claims, **characterized in that**
- the comparison (V) of the parameters is formed by forming a difference, a quotient, a variance or a combination with greyscale value distribution information.

4. Method according to Claim 3, **characterized in that**
- the comparison (V) is formed by forming a difference and
- the dependence of the result is formed by at least two threshold value comparisons, wherein
- the aerosol is detected or classified when the lower threshold value is exceeded and the higher threshold value is undershot.

5. Method according to any of the preceding claims, **characterized in that**
- the result of the comparison (D) is subjected to a second, further comparison,
- wherein the second comparison is carried out with the expected result of the comparison in the event that an aerosol is not present.

6. Method according to any of the preceding claims, **characterized in that**
- a convolution of the spectrum (*) of the headlight with the absorption characteristic of at least one possible aerosol (Figure 3b) is carried out and
- the aerosol (104) is detected (406) in dependence thereon.

7. Method according to any of the preceding claims, **characterized in that**
- the parameters are ascertained only by taking into account a section of the image (106).

8. Method according to Claim 7, **characterized in that**
- the aerosol (104) is illuminated (103) by means of one or more headlights, and
- the section (106) is selected such that
- in it, the best possible lighting by the headlight (103) takes place and/or
- it is tracked in accordance with the steering angle and/or
- it is set according to the surface topology of the scenery located in the image (101).

9. Method according to any of the preceding claims, **characterized in that**
- the aerosol detection (405) undergoes a plausibility check with further data (402, 403, 404).

10. Use of the method, in which the aerosol (104) is illuminated (103) by means of one or more headlights, according to any of the preceding claims,
- for closed-loop control of the light emission range or light distribution (411, 412) of the headlights (L) and/or
- activation or influencing of other safety/comfort/driver assistance or drivetrain functions.

11. Apparatus for detecting (405) an aerosol (104), aligned to carry out a method according to any of Claims 1 to 11.

## Revendications

1. Procédé de détection (405) d'un aérosol (104)
- au moyen d'au moins une image (101) capturée par une caméra (K) pour un véhicule,
- dans une première étape, une première valeur d'un paramètre (P) étant déterminée à partir de l'au moins une image après un premier filtrage de couleur (F1) et
- dans une deuxième étape, une deuxième valeur du même paramètre (P) étant déterminée à partir de l'une ou l'autre image ou d'une autre image qui a été capturée par la caméra, sans le premier filtrage de couleur (F1) ou avec un deuxième filtrage de couleur (F2), qui est différent du premier filtrage de couleur (F1), et
- les valeurs déterminées étant comparées (V), et
- la détection (410, 406) ou la détermination de la densité ou la classification de l'aérosol étant effectuée en fonction du résultat de la comparaison (D), et
- le paramètre étant la valeur de luminosité (M) moyenne ou le gradient des pixels,
- l'aérosol (104) étant éclairé (103) au moyen d'au moins un projecteur, **caractérisé en ce que**
- la caractéristique spectrale d'au moins un projecteur (Fig. 3a) est prise en compte.

2. Procédé selon la revendication 1, **caractérisé en ce que**
- le premier filtrage de couleur (F1) détermine la composante rouge (R, M_{R}) et
- la composante grise (M_{G}) est déterminée sans deuxième filtrage de couleur (F2).

3. Procédé selon l'une des revendications précédentes, **caractérisé en ce que**
- la comparaison (V) des paramètres est formée par la formation d'une différence, d'un quotient, d'une variance ou d'une combinaison avec des informations de distribution de valeurs de gris.

4. Procédé selon la revendication 3, **caractérisé en ce que**
- la comparaison (V) est formée par la formation d'une différence et
- la dépendance du résultat est formée par au moins deux comparaisons de valeurs de seuil,
- l'aérosol étant détecté ou classé lorsque la valeur de seuil inférieure est franchie vers le haut et lorsque la valeur supérieure est franchie vers le bas.

5. Procédé selon l'une des revendications précédentes, **caractérisé en ce que**
- le résultat de la comparaison (D) est soumis à une deuxième comparaison plus poussée,
- la deuxième comparaison étant effectuée avec le résultat attendu de la comparaison en cas d'absence d'aérosol.

6. Procédé selon l'une des revendications précédentes, **caractérisé en ce que**
- une convolution du spectre (*) de l'au moins un projecteur est réalisée avec les caractéristiques d'absorption d'au moins un éventuel aérosol (Fig. 3b) et
- l'aérosol (104) est détecté (406) en fonction de ladite convolution.

7. Procédé selon l'une des revendications précédentes, **caractérisé en ce que**
- la détermination des paramètres n'est effectuée qu'avec prise en compte d'une partie de l'image (106).

8. Procédé selon la revendication 7, **caractérisé en ce que**
- l'aérosol (104) est éclairé (103) au moyen d'un ou plusieurs projecteurs et
- la partie (106) est choisie de telle sorte que
- le meilleur éclairage possible dans ladite partie est donné par l'au moins un projecteur (103) et/ou
- ladite partie est suivie en fonction de l'angle de braquage et/ou
- ladite partie est réglée en fonction de la topologie de surface du décor (101) se trouvant dans l'image.

9. Procédé selon l'une des revendications précédentes, **caractérisé en ce que**
- la détection d'aérosol (405) est vérifiée quant à sa plausibilité avec d'autres données (402, 403, 404).

10. Utilisation du procédé, dans lequel l'aérosol (104) est éclairé (103) au moyen d'un ou plusieurs projecteurs, selon l'une des revendications précédentes,
- pour réguler la portée ou la distribution de lumière (411, 412) des projecteurs (L) et/ou
- pour activer d'autres fonctions de sécurité/de confort/d'assistance à la conduite ou de transmission ou influer sur celles-ci.

11. Dispositif de détection (405) d'un aérosol (104) conçu pour mettre en œuvre un procédé selon l'une des revendications 1 à 11.
